# EUROPEAN PATENT SPECIFICATION

(11) **EP 1 219 783 B1**
(45) Date of publication and mention of the grant of the patent: **30.11.2005**
(21) Application number: 01129166.3
(22) Date of filing: 08.12.2001
(51) Int. Cl.: F01D 9/04, F01D 25/12

(54) **Stator vane assembly for an axial flow turbine**
Leitschaufelanordnung für eine Axialturbine
Agencement d'aube statorique pour une turbine axiale

(30) Priority: 28.12.2000 RU 2000133223
(43) Date of publication of application: 03.07.2002
(73) Proprietor: Alstom Technology Ltd, 5400 Baden (CH)
(72) Inventor: Bekrenev, Igor, 129301 Moscow (RU)

(56) References cited:
- EP-A- 0 899 426
- WO-A-99/54597
- GB-A- 702 549
- US-A- 2 994 508
- US-A- 3 056 582
- US-A- 3 362 681
- US-A- 3 427 000
- US-A- 5 630 702

## Description

The invention relates to the design of a stator vane for a turbomachine. In particular, it relates to the design of a vane root, providing a detachable connection between the vane body and the stator casing of such a machine by means of attachment elements, preferably screws.

RU 2038487 Cl discloses a widely used type of attachment for connecting a stator vanes to the stator casing of a multistage turbine. The stator, which encloses a conically expanding flow channel comprises a plurality of individual segments. The inner shell of the stator casing has annular recesses, with which projections on the vane root are engaged, thus forming a positively locking connection between the stator vane and the stator casing.

EP 0899426 discloses a vane element for a low pressure gas turbine. The platform at the radially outer end is adapted for connection to the casing. For this purpose two hook-type projections are formed on the outer platform for engaging the vane element on the housing. In addition, a bolt in the casing engages in a hole in the platform and supports the vane segment against forces in circumferential direction.

These solutions result in a complex manufacture of the stator casing due to its complicated structure, characterized by numerous projections and recesses.

In order to avoid these disadvantages, it is known to connect the vane to the stator casing by means of attachment screws. According to A.V. Shtoda et al. "Konstrukcija aviacionnyh gazoturbinnyh drigatelej", Zhukovsky Military Aircraft Engineering Academy 1958, p.141 or US 2994508 the stator vane root is equipped with an expanded region in the form of a plate. The vane is attached to the casing by means of two screws. In comparison with those technical solutions considered hereabove, this proposal allows the stator casing to be constructed in a considerably simplified manner with a correspondingly reduced manufacturing costs. In this case, a narrower gap in the labyrinth seal can be designed, since there is no need for an appropriate clearance between the mutually engaging projections and recesses on the stator casing and on the stator vane.

However, this solution has the disadvantage that two screws are required to fix the vane securely. The root plate is fixed to the stator casing by one screw, located upstream of the vane body in the flow direction, and another located downstream of it. This additional space requirement for screw arrangement leads, in the end, to an increase in the overall length of the turbine. Differences in the temperature between the vane root and the stator casing during non-steady-state process phases result in different thermal expansion of the materials. This leads to undesirable material stresses in the area located between the screws. Finally, the complete vane root including the attachment elements is subjected to the influence of the hot process gases, without any protection against such action. This, on the one hand, increases the amount of heat transferred to the stator, while on the other hand uneven areas on the surface cause disturbances in the channel flow.

It is an object of the present invention to provide a stator vane which allows a simple and reliable screw connection to the stator casing, whereas the cited disadvantages of the prior art solutions are avoided.

This object is achieved, in accordance with the invention, by designing a stator vane in accordance with the features of claim 1. Particular embodiments of the invention are described in the dependent claims.

The basic idea of the invention is to design the vane root as a hollow profile, comprising a radially inner platform, which is adapted to the conical contour of the flow channel, at a distance thereof, a radially outer platform, which is adapted to the contour of the stator casing and two essentially parallel sidewalls, wherein said platforms and sidewalls enclose a cavity, the radially outer platform is equipped with a hole for accommodating an attachment element, preferably an attachment screw, from the stator casing, wherein means are provided for applying a coolant to the cavity in the installed state.

The cavity, enclosed by said root platforms and sidewalls provides a space to accommodate the attachment elements, as will be explained in more detail in the following text.

The surface of the radially outer platform is provided with recesses. When placed against the stator casing, this creates additional cavities, which make it more difficult for heat to be transferred.
In an alternative embodiment, or in addition, the inner wall of the stator casing may also have corresponding recesses.

In one alternative embodiment, the radially outer platform is not an integral component of the vane root, but is detachably connected to it. In this case, the vane root is formed only by the radially inner platform and the two radially oriented walls, which are arranged oppositely and the ends of which are bent inwardly at right angles. The steps produced in this way act as contact edges for a detachable plate.

In another alternative embodiment, the sidewalls are mutually connected by two crosspieces so that these two walls, the two crosspieces, the inner root platform, the outer root platform and the cylindrical surface of the stator casing form a cavity. In this case, if the walls and the crosspieces are tightly fitted to the cylindrical surface of the stator casing, and this assembly is tightened by a screw connection, a sufficiently sealed connection can be ensured in this assembly.

In this case a mass flow of cooling gas can be supplied into this cavity through a channel formed in the stator casing and also through a channel formed in the radially outer root platform, without any danger of large losses due to leakage into the flow channel. In this case another channel can be made in both the radially outer platform and the stator casing to discharge the cooling gas from this cavity.

In a further alternative embodiment, the sidewalls are arranged in a direction parallel to the longitudinal axis of the stator, this ensuring that the bearing surfaces adjoin to the cylindrical surface and to the end surface of stator casing. The ends of the inner platform of the vane root also adjoin to the above mentioned surfaces of the stator casing. In this case the fastening element is arranged obliquely with respect to the cylindrical surface and to the end surface of the stator casing, and it is oriented such as to provide simultaneous pressing of above mentioned bearing surfaces to the stator casing. In this case, a sealtight cavity, isolated from the hot gases passing through the gas flow channel, is formed between the end surface of the stator casing, its cylindrical surface, the inner platform of the vane root and its two walls.

This design makes it possible to cool the internal walls of this cavity by cooling gas stream without any danger of large losses due to leakages of coolant into the gas flow channel. In this case, an outlet channel for discharge of the cooling gas from this cavity may also be formed in the stator casing. With this design cooling of the vane root and even of the internal cavity in the vane airfoil (if any) proceeds without cooling gas losses, and, as a consequence, a corresponding increase of plant efficiency is possible.

An important advantage of this embodiment is also the possibility of mounting a vane without any seals between the platforms and the other parts of the vane root, because the proposed design of joints between the corresponding parts of the vane root and the stator casing makes possible a virtually complete protection of the inner stator surface against the action of hot gases from the turbine gas flow path.

The advantages of the design of a vane root according to the invention are, in particular, the fact that the heat transferred from the flow channel to the stator is considerably reduced. The gas-filled cavity enclosed by the hollow profile restricts the passage of heat. The vane root platform, which rests directly on the stator casing, is subject to less thermal stress. This reduces the thermal conduction both via the contact surface and via the attachment element. Overall, as a result of this, the temperature in the stator casing is lower. Furthermore, the accommodation of the attachment element or elements in the cavity protects them against the direct influence of the hot process gases which also increases the reliability of the connection, and thus safety. Since, in this solution, the attachment element does not occupy any additional space in front of and behind the vane body, the axial extent of the root platform is limited to the size governed by the vane body. Thus the invention does not suffer from the disadvantage of an increase in the overall length of the turbines.

Furthermore, the root platforms and attachment elements have no effect on the channel flow.

The drawings show preferred embodiments of the invention, highly schematically. Only those features which are necessary in order to understand the invention are shown. Identical or mutually corresponding elements have the same reference symbols.
- Figure 1: shows a longitudinal section through a means for fixing a stator vane;
- Figure 2: shows a cross-sectional illustration along the line A-A shown in Figure 1;
- Figure 3: shows a longitudinal section of an alternative embodiment;
- Figure 4: shows a cross-sectional illustration along the line A-A shown in Fig. 1 of another alternative embodiment;
- Figure 6: shows a longitudinal section of a fourth alternative embodiment;
- Figure 7: shows a cross-sectional illustration along the line B-B shown in Figure 6.

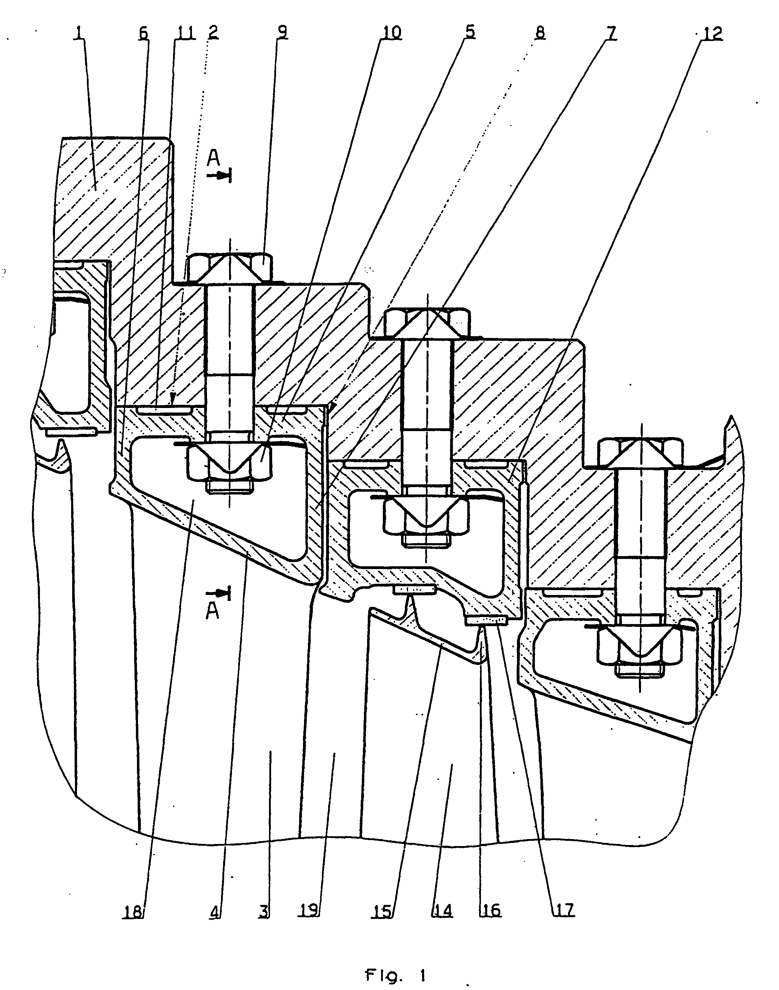

A blade system shown in Figure 1 alternately comprises rows of rotor blades (14) and stator vanes (3) in a conically expanding flow channel (19), surrounded by the stator casing (1). The rotor blades (14), which are anchored in the rotor (not shown) are fitted with shroud elements (15) at their blade tips. On their upper face, the shroud elements (15) have sealing ribs (16) which run parallel to the direction of rotation and run against sealing strips (17) on a heat shield (12) that is connected to the stator casing (1).

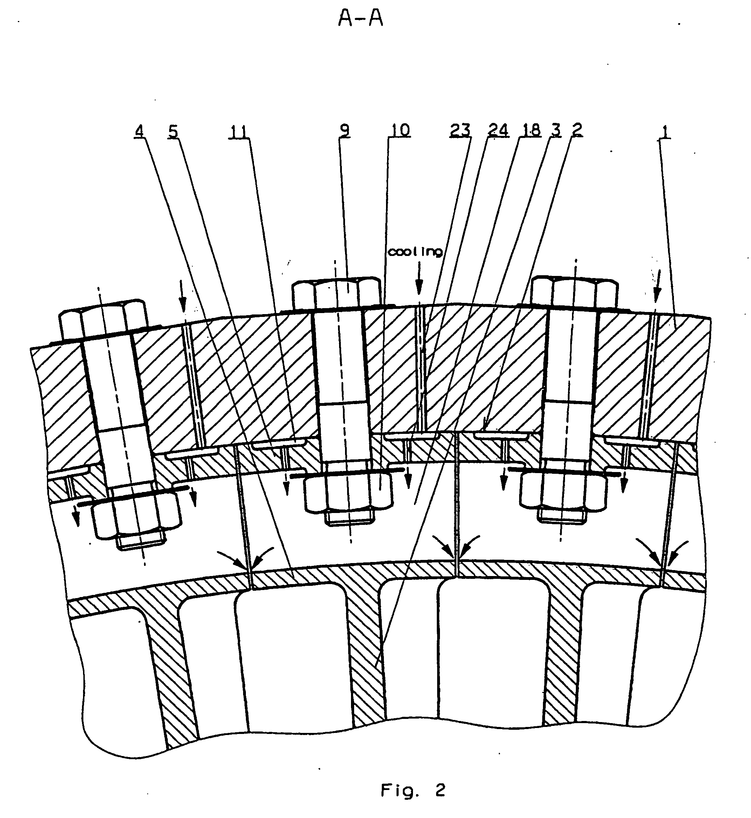

The conically expanding stator casing (1) is constructed in the form of steps, comprising a plurality of cylindrical sections (2) of increasing diameter. These cylindrical sections (2) communicate in their radial and axial extent with the rows of vanes and blades (3) and (14). Each of these sections (2) is alternately fitted with a stator vane (3) or a heat shield (12), so as to produce an approximately continuous, conical internal contour of the flow channel (19). The root of the stator vane (3) forms a hollow profile, comprising a radially inner root platform (4) and a radially outer root platform (5), connected to each other by parallel sidewalls (6) and (7) running transversely with respect to the flow direction. The radially inner platform (4) has an inclination which corresponds to the conicity of the flow channel (19). The downstream wall (6) is thus generally shorter than the wall (7), so that the cavity (18), that is formed for each stator row, has a more or less trapezoidal to approximately triangular cross-sectional shape. The root platforms (4) of adjacent vanes (3) abut against one another and form a continuous, approximately closed channel wall in each row of vanes (3), as can be seen from Figure 2. The radially outer root platform (5) rests on the cylindrical region (2) of the stator casing (1). Recesses (11) in the platform surface (5) and/or casing surface (1) reduce the amount of heat transmitted. The stator casing (1) and platform (5) have coaxial through-holes for an attachment screw (9). The screw shank which passes through the stator casing (1) from the outside projects into the cavity (18), where it interacts with a threaded nut (10). The term threaded nut (10) should not be regarded in a narrow sense here. For example, it may also be an insert integrated in the root platform and having a threaded hole. When the screw (9), (10) is tightened, the stator vane (3) is connected to the stator casing (1) with a force fit and a positive lock. In addition to being fixed by the attachment screw (9), the vane (3) is also held by the positive lock with the wall of the stator casing (1) in the region of the contact surface (8). The protected arrangement within the cavity (18) has the consequence that the screw shank (9) and the threaded nut (10) are largely removed from the influence of the process gases. At the same time, these parts cannot exert any negative influence on the flow conditions in the flow channel (19). The inner wall of channel (19) has a largely smooth contour. Coolant is fed into the cavity (18) by means of channels (23) made in the stator casing (1) and channels (24) made in the radially outer platform (5).

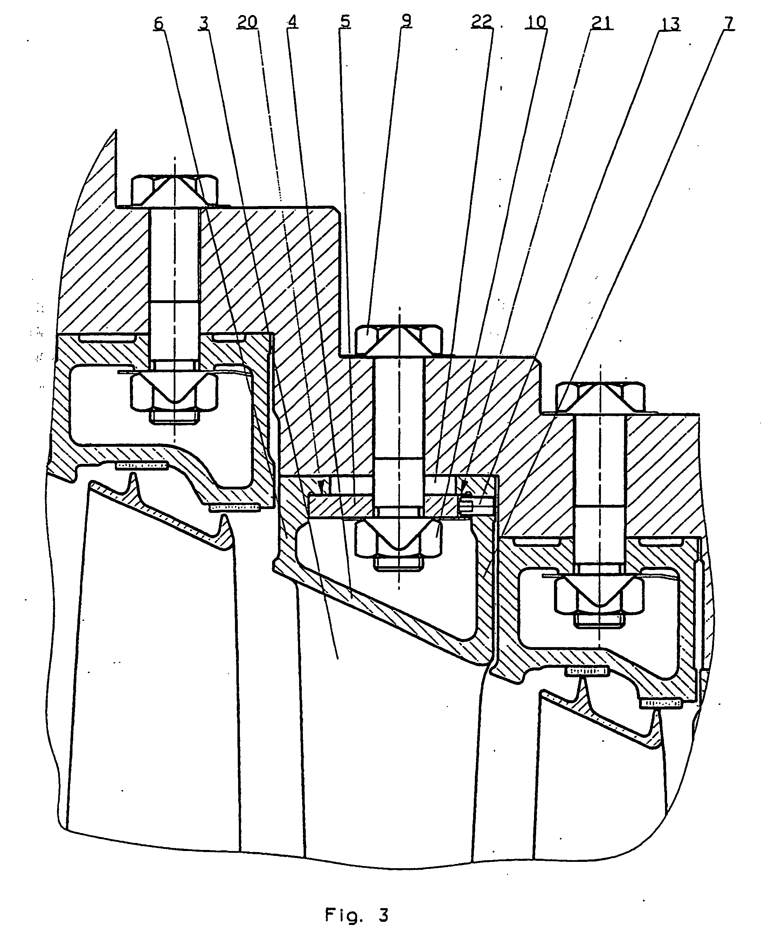

The embodiment shown in Figure 3 differs from that shown in Figure 1 in that the platform (5) is no longer an integral component of the vane root, but is produced separately from it, as an independent element, and is inserted into the profile during assembly. This embodiment has advantages particularly in the process of production, in conjunction with the use of vanes with internal cooling. This measure simplifies the process of casting and fitting these vanes.

In this case, the outer ends of the side walls (6) and (7) are bent inwardly at right angles in order to form two contact surfaces (20) and (21), arranged in the same plane, for engaging with a plate (5) which is to be inserted. A gap (22) which reduces the heat transfer is formed between the stator casing (1) and the root plate (5), depending on the wall thickness of the contact surfaces (20) and (21). The outer plate (5) is then inserted into the hollow profile of the vane root during the assembly process, or, in a kinematically reversed manner, the hollow profile is pushed over the plate (5), which is connected loosely to the attachment screw (9). The root plate (5) can be fixed in the hollow profile by using a locking pin (13).

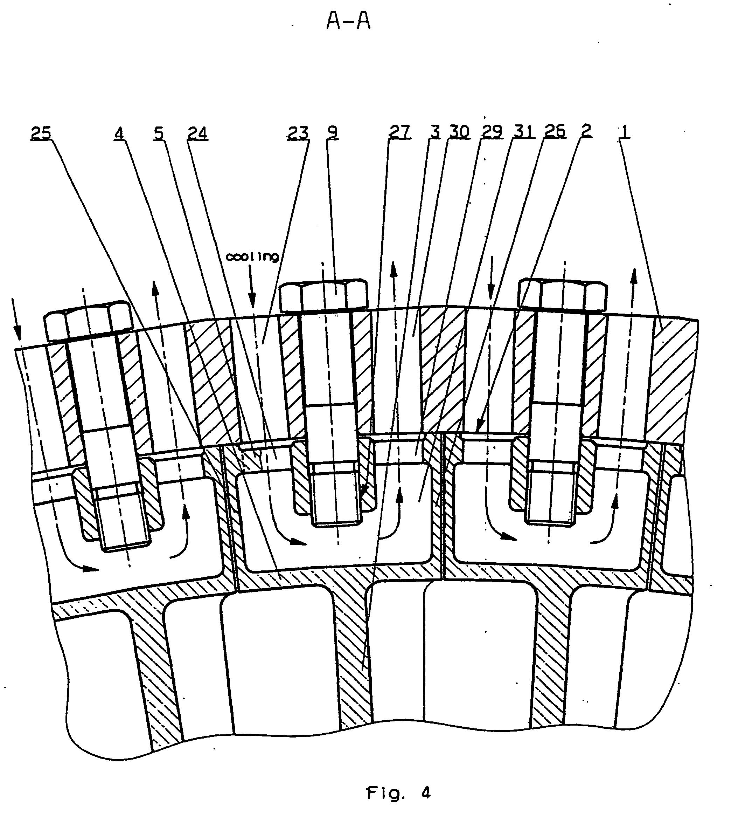

Another embodiment of a vane root is shown in Figure 4 where crosspieces (25) and (26) connect the side walls (6) and (7) (Fig.1) and adjoin to the inner root platform (4). Thus, the cavity (31) is formed between the two walls (6), (7), the two cross pieces (25), (26), the inner root platform (4) and the surface of the cylindrical casing section (2) of the stator casing (1). Due to formation of tight fitting the walls (6), (7), and crosspieces (25), (26) to the surface of the cylindrical casing section (2), and due to tightening of this joint by threaded connection implemented in the platform (5) and consisting of the screw (9) and the threaded hole (27) a sufficiently sealed connection can be created in this joint. This allows the walls of cavity (31) to be cooled virtually without any loss of coolant. To feed coolant into the cavity (31), inlet channels (23) are made in the stator casing (1), and inlet channels (24) are made in the platform (5). Appropriate channels (29), (30) are provided for discharge of the coolant.

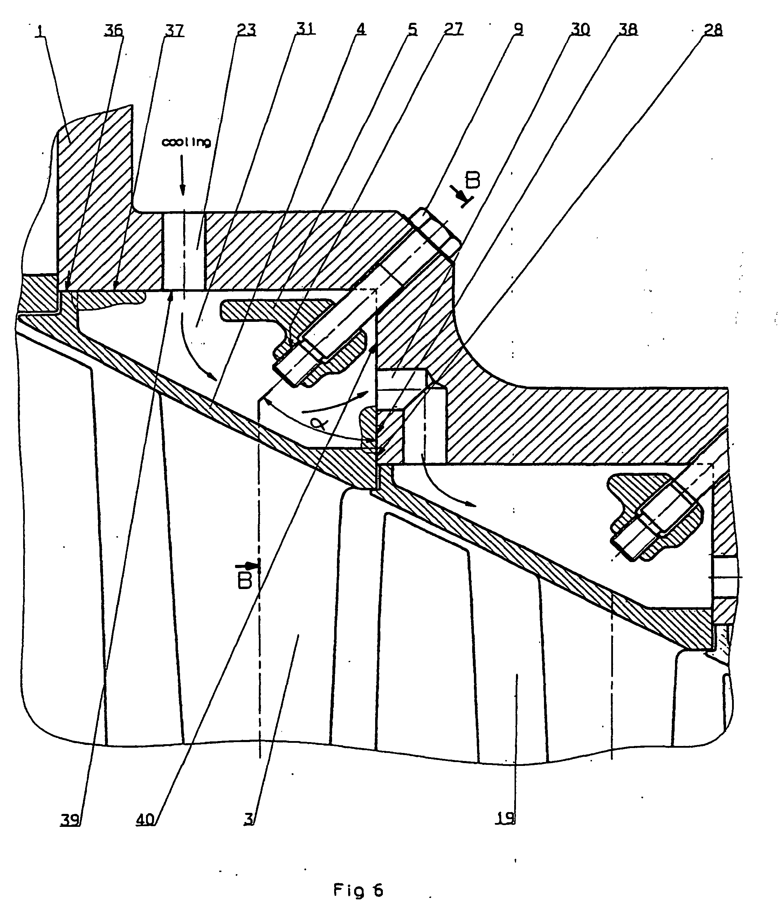

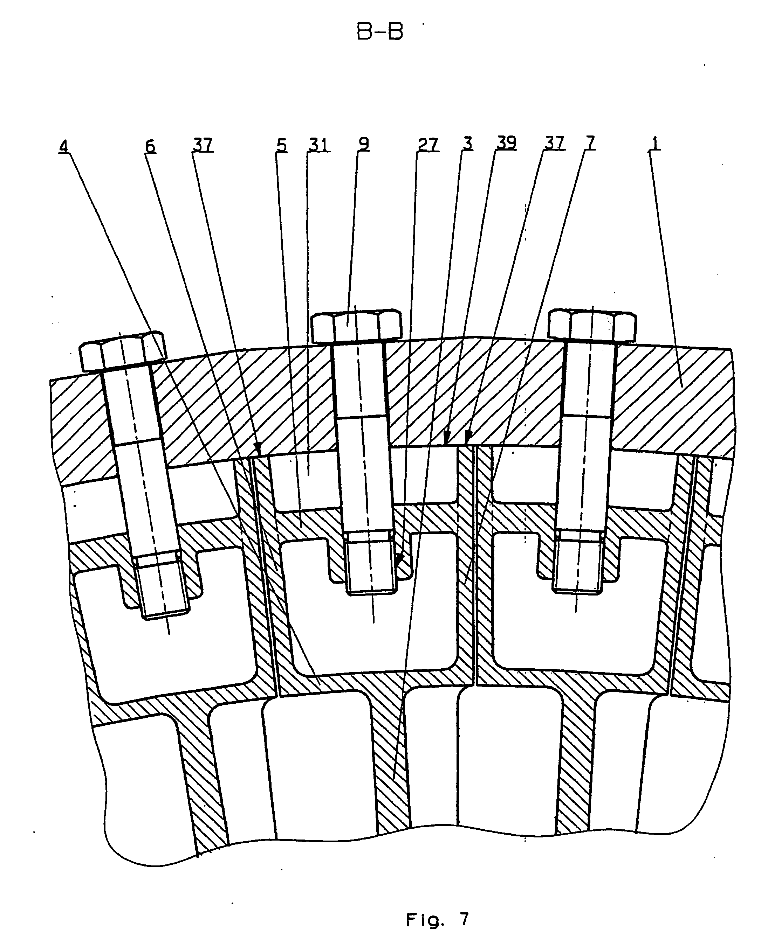

A further embodiment of a vane root is shown in Figures 6 and 7, where walls (6) and (7) are arranged parallel to the longitudinal axis of the stator (1). Bearing surfaces (37) and (38) of the side walls (6) and (7) adjoin simultaneously to the cylindrical surface (39) and to the end surface (40) of the stator casing 1. The radially inner root platform (4) also adjoins to above-mentioned surfaces (39) and (40) of the stator casing (1) at contact surfaces (36) and (28). Thus, side walls (6) and (7), together with the radially inner root platform (4), the cylindrical surface (39) and the end surface (40) form a sufficiently sealed cavity (31) that is virtually completely isolated from the hot gases passing through the flow channel (19). The attachment element (9) may be arranged close to the line of intersection between the cylindrical surface (39) and the surface (40) of stator casing (1) and be inclined at an angle α to the end surface (40), that makes it possible to ensure simultaneous pressure of the above mentioned bearing surfaces (37), (38) and also contact surfaces (36) and (28) to surfaces (39), (40) of the stator casing (1). The threaded hole (27) for the attachment element (9) is situated directly in the radially outer root platform (5). This embodiment also provides the possibility of forming an inlet channel (23) and an outlet channel (30) in the stator casing (1) to feed and to discharge coolant. In this case, virtually no losses of coolant from cavity (31) seeping into the flow channel (19) are observed.

### List of reference symbols

- 1: Stator, stator casing
- 2: Cylindrical casing sections
- 3: Stator vane
- 4: Radially inner root platform
- 5: Radially outer root platform, plate
- 6: Side wall of the vane root
- 7: Side wall of the vane root
- 8: Contact surface
- 9: attachment element
- 10: Threaded nut
- 11: Recesses
- 12: Heat shield
- 13: Pin
- 14: Rotor blade
- 15: Shroud element
- 16: Sealing ribs
- 17: Sealing strips
- 18: Cavity
- 19: Flow channel
- 20: Contact surface
- 21: Contact surface
- 22: Gap
- 23: inlet channel in the stator casing
- 24 -: inlet channel in the radially outer root platform
- 25 -: cross piece
- 26 -: cross piece
- 27 -: threaded hole
- 28 -: contact surface
- 29 -: coolant discharge channel in the outer platform
- 30 -: coolant discharge channel in the stator casing
- 31 -: cavity
- 36 -: contact surface
- 37 -: bearing surface
- 38 -: bearing surface
- 39 -: cylindrical surface of casing section;
- 40 -: end surface of casing section.

## Claims

1. A stator vane assembly (3) for an axial flow turbine with a conically expanding flow channel (19), wherein the stator vane root is in the form of a hollow profile with a cavity (18, 31), comprising a radially inner root platform (4) which is adapted to the contour of the flow channel (19), and, at a distance thereof, a radially outer root platform (5), adapted to the contour of the stator casing (1), and two essentially parallel sidewalls (6) and (7), wherein the outer platform (5) is equipped with at least one hole for accommodating an attachment element (9) from the stator casing (1),
**characterized in that**
means are provided for applying a coolant to the cavity (18, 31) in the installed state.

2. The stator vane assembly (3) as claimed in claim 1,
**characterized in that**
a channel (23) in the stator casing (1) and a channel (24) in the radially outer platform (5) are arranged to feed the coolant into the cavity (18, 31).

3. The stator vane assembly (3) as claimed in claim 2,
**characterized in that**
a channel (29) in the radially outer platform (5) and a channel (30) in the stator casing (1) are arranged to discharge the coolant from the cavity (18, 31).

4. The stator vane assembly (3) as claimed in claim 1,
**characterized in that**
the contact surface between the radially outer platform (5) and the stator casing (1) has recesses (11).

5. The stator vane assembly (3) as claimed in claim 4,
**characterized in that**
the surface of the radially outer platform (5) is provided with recesses (11).

6. The stator vanes assembly (3) as claimed in claim 1,
**characterized in that**
the radially outer platform (5) is detachably connected to the vane root.

7. The stator vanes assembly (3) as claimed in claim 6,
**characterized in that**
the radially outer ends of sidewalls (6) and (7) are bent at least approximately at right angles inwardly, and form two contact surfaces (20) and (21), lying in parallel planes for the contact with the radially outer platform (5).

8. The stator vane assembly (3) as claimed in claim 1,
**characterized in that**
two crosspieces (25, 26) are arranged between the sidewalls (6, 7).

9. The stator vane assembly (3) as claimed in claim 8,
**characterized in that**
• the sidewalls (6, 7) and the crosspieces (25, 26) tightly bear on a cylindrical section (2) of the stator casing (1),
• the side walls (6, 7), the crosspieces (25, 26), and the radially inner platform (4) form the cavity (31) essentially tightly separated from the flow channel (19), and
• inlet channels (23) and (24) for the coolant and outlet channels (29) and (30) for the coolant are arranged in the stator casing (1) and in the radially outer platform (5).

10. The stator vane assembly (3) as claimed in claim 1,
**characterized in that**
• the sidewalls (6,7) are arranged in parallel to the longitudinal axis of the stator (1),
• first bearing surfaces (37) of the sidewalls (6,7) bear on a cylindrical surface (39) of the stator casing (1),
• second bearing surfaces (38) of the sidewalls (6, 7) bear on an end surface (40) of the stator casing (1),
• the side walls (6,7) and the inner platform (4) form the cavity (31) essentially tightly separated from the flow channel (19),
• the attachment element (9) is inclined at an angle to the end surface (40) of the stator casing (1) to ensure simultaneous pressing of the first and second bearing surfaces against the cylindrical and the end surfaces and
• an inlet channel (23) and an outlet channel (30) for the coolant are arranged in the stator casing (1).

## Patentansprüche

1. Leitschaufelanordnung (3) für eine Axialturbine mit einem konisch erweiterten Strömungskanal (19), bei der
der Leitschaufelfuß in Form eines Hohlprofils mit einer Kavität (18, 31) vorliegt, das eine radial innere Fußplattform (4), die an die Kontur des Strömungskanals (19) angepasst ist, und in einem Abstand dazu eine radial äußere Fußplattform (5), die an die Kontur des Statorgehäuses (1) angepasst ist, und zwei im Wesentlichen parallele Seitenwände (6) und (7), umfasst, wobei die äußere Plattform (5) mit mindestens einem Loch zur Aufnahme eines Befestigungselements (9) vom Statorgehäuse (1) versehen ist,
**dadurch gekennzeichnet, dass**
Mittel zur Zuführung eines Kühlmittels zur Kavität (18,31) im installierten Zustand vorgesehen sind.

2. Leitschaufelanordnung (3) nach Anspruch 1,
**dadurch gekennzeichnet, dass**
ein Kanal (23) im Statorgehäuse (1) und ein Kanal (24) in der radial äußeren Plattform (5) zur Zuführung des Kühlmittels in die Kavität (18, 31) angeordnet sind.

3. Leitschaufelanordnung (3) nach Anspruch 2,
**dadurch gekennzeichnet, dass**
ein Kanal (29) in der radial äußeren Plattform (5) und ein Kanal (30) im Statorgehäuse (1) zur Abführung von Kühlmittel aus der Kavität (18, 31) angeordnet sind.

4. Leitschaufelanordnung (3) nach Anspruch 1,
**dadurch gekennzeichnet, dass**
die Kontaktfläche zwischen der radial äußeren Plattform (5) und dem Statorgehäuse (1) Aussparungen (11) aufweist.

5. Leitschaufelanordnung (3) nach Anspruch 4,
**dadurch gekennzeichnet, dass**
die Fläche der radial äußeren Plattform (5) mit Aussparungen (11) versehen ist.

6. Leitschaufelanordnung (3) nach Anspruch 1,
**dadurch gekennzeichnet, dass**
die radial äußere Plattform (5) lösbar mit dem Schaufelfuß verbunden ist.

7. Leitschaufelanordnung (3) nach Anspruch 6,
**dadurch gekennzeichnet, dass**
die radial äußeren Enden der Seitenwände (6) und (7) zumindest ungefähr in einem rechten Winkel nach innen gebogen sind und zwei Kontaktflächen (20) und (21) bilden, die in parallelen Ebenen für den Kontakt mit der radial äußeren Plattform (5) liegen.

8. Leitschaufelanordnung (3) nach Anspruch 1,
**dadurch gekennzeichnet, dass**
zwei Querträger (25, 26) zwischen den Seitenwänden (6, 7) angeordnet sind.

9. Leitschaufelanordnung (3) nach Anspruch 8,
**dadurch gekennzeichnet, dass**
- die Seitenwände (6, 7) und die Querträger (25, 26) dicht an einem zylindrischen Abschnitt (2) des Statorgehäuses (1) anliegen,
- die Seitenwände (6, 7), die Querträger (25, 26) und die radial innere Plattform (4) die Kavität (31) bilden, die im Wesentlichen dicht vom Strömungskanal (19) beabstandet ist, und
- Einlasskanäle (23) und (24) für das Kühlmittel und Auslasskanäle (29) und (30) für das Kühlmittel im Statorgehäuse (1) und in der radial äußeren Plattform (5) angeordnet sind.

10. Leitschaufelanordnung (3) nach Anspruch 1,
**dadurch gekennzeichnet, dass**
- die Seitenwände (6, 7) parallel zur Längsachse des Stators (1) angeordnet sind,
- erste Lagerflächen (37) der Seitenwände (6, 7) an einer zylindrischen Fläche (39) des Statorgehäuses (1) anliegen,
- zweite Lagerflächen (38) der Seitenwände (6, 7) an einer Endfläche (40) des Statorgehäuses (1) anliegen,
- die Seitenwände (6, 7) und die innere Plattform (4) die Kavität (31) bilden, die im Wesentlichen eng vom Strömungskanal (19) beabstandet ist,
- das Befestigungselement (9) in einem Winkel zur Endfläche (40) des Statorgehäuses (1) geneigt ist, um ein gleichzeitiges Drücken der ersten und der zweiten Lagerfläche gegen die zylindrische und die Endfläche zu gewährleisten, und
- ein Einlasskanal (23) und ein Auslasskanal (30) für das Kühlmittel im Statorgehäuse (1) angeordnet sind.

## Revendications

1. Ensemble d'aube de stator (3) d'une turbine à écoulement axial qui présente un canal d'écoulement (19) qui s'évase en cône et dans lequel le pied d'aube de stator présente la forme d'un profilé creux doté d'une cavité (18, 31) qui comprend une plate-forme de pied (4) située radialement à l'intérieur et adaptée au contour du canal d'écoulement (19), une plate-forme de pied (5) située à distance radiale à l'extérieur du canal d'écoulement et adaptée au contour du boîtier de stator (1) et deux parois latérales (6) et (7) essentiellement parallèles, au moins un orifice étant ménagé dans la plate-forme extérieure (5) pour loger un élément de fixation (9) du boîtier de stator (1),
**caractérisé en ce que** lorsque l'ensemble est installé, des moyens sont prévus pour délivrer un fluide de refroidissement dans la cavité (18, 31).

2. Ensemble d'aube de stator (3) selon la revendication 1, **caractérisé en ce qu'**un canal (23) situé dans le boîtier de stator (1) et un canal (24) situé dans la plate-forme (5) située radialement à l'extérieur sont agencés pour délivrer le fluide de refroidissement dans la cavité (18, 31).

3. Ensemble d'aube de stator (3) selon la revendication 2, **caractérisé en ce qu'**un canal (29) situé dans la plate-forme (5) située radialement à l'extérieur et un canal (30) situé dans le boîtier de stator (1) sont agencés pour décharger le fluide de refroidissement de la cavité (18, 31).

4. Ensemble d'aube de stator (3) selon la revendication 1, **caractérisé en ce que** la surface de contact entre la plate-forme (5) située radialement à l'extérieur et le boîtier de stator (1) présente des creux (11).

5. Ensemble d'aube de stator (3) selon la revendication 4,**caractérisé en ce que** la surface de la plate-forme (5) située radialement à l'extérieur est dotée de creux (11).

6. Ensemble d'aube de stator (3) selon la revendication 1, **caractérisé en ce que** la plate-forme (5) située radialement à l'extérieur est reliée de manière libérable au pied de l'aube.

7. Ensemble d'aube de stator (3) selon la revendication 6, **caractérisé en ce que** les extrémités situées radialement à l'extérieur des parois latérales (6) et (7) sont pliées vers l'intérieur au moins approximativement à angle droit et forment deux surfaces de contact (20) et (21) situées dans des plans parallèles pour assurer le contact avec la plate-forme (5) située radialement à l'extérieur.

8. Ensemble d'aube de stator (3) selon la revendication 1, **caractérisé en ce que** deux pièces transversales (25, 26) sont agencées entre les parois latérales (6, 7).

9. Ensemble d'aube de stator (3) selon la revendication 8, **caractérisé en ce que**
les parois latérales (6, 7) et les pièces transversales (25, 26) sont soutenues étroitement sur une partie cylindrique (2) du boîtier de stator (1),
les parois latérales (6, 7), les pièces transversales (25, 26) et la plate-forme (4) située radialement à l'intérieur forment la cavité (31) séparée essentiellement étroitement du canal d'écoulement (19) et
des canaux d'admission (23) et (24) du fluide de refroidissement et des canaux de décharge (29) et (30) du fluide de refroidissement sont agencés dans le boîtier de stator (1) et dans la plate-forme (5) située radialement à l'extérieur.

10. Ensemble d'aube de stator (3) selon la revendication 1, **caractérisé en ce que**
les parois latérales (6, 7) sont agencées parallèlement à l'axe longitudinal du stator (1),
des premières surfaces de support (37) des parois latérales (6, 7) sont soutenues sur une surface cylindrique (39) du boîtier de stator (1),
des deuxièmes surfaces de support (38) des parois latérales (6, 7) sont soutenues sur une surface d'extrémité (40) du boîtier de stator (1),
les parois latérales (6, 7) et la plate-forme intérieure (4) forment la cavité (31) séparée essentiellement étroitement du canal d'écoulement (19),
l'élément de fixation (9) est incliné obliquement par rapport à la surface d'extrémité (40) du boîtier de stator (1) pour garantir le serrage simultané des premières et des deuxièmes surfaces de support contre la surface cylindrique et la surface d'extrémité et
un canal d'admission (23) et un canal de décharge (30) du fluide de refroidissement sont agencés dans le boîtier de stator (1).
